Europäisches Patentamt

(19) European Patent Office

Office européen des brevets

(11) Publication number: **0 284 348 B1**

(12) **EUROPEAN PATENT SPECIFICATION**

(45) Date of publication of patent specification: **02.12.92**   (51) Int. Cl.⁵: **H04N 3/23**

(21) Application number: **88302504.1**

(22) Date of filing: **22.03.88**

(54) **Gullwing distortion correction circuit.**

(30) Priority: **23.03.87 GB 8706822**
        **29.09.87 US 102514**

(43) Date of publication of application:
    **28.09.88 Bulletin  88/39**

(45) Publication of the grant of the patent:
    **02.12.92 Bulletin  92/49**

(84) Designated Contracting States:
    **DE FR GB IT**

(56) References cited:
    **EP-A- 0 201 336**
    **WO-A-86/00170**

(73) Proprietor: **RCA Thomson Licensing Corporation**
    **2 Independence Way**
    **Princeton New Jersey 08540(US)**

(72) Inventor: **Leonardi, Giovanni Michele**
    **Dennlerstrasse 20a**
    **CH-8048 Zurich(CH)**

(74) Representative: **Pratt, Richard Wilson et al**
    **London Patent Operation G.E. Technical Services Co. Inc. Essex House 12/13 Essex Street**
    **London WC2R 3AA(GB)**

## Description

This invention relates to gullwing distortion corrected deflection circuits for television picture tubes, particularly new, flatter faceplate picture tubes, such as the RCA Corporation square-planar picture tubes, which have aspherical faceplate curvatures.

In one form of flatter faceplate picture tube, as typified by the RCA 110° COTY-SP, square-planar, 27V, color television picture tube A68ACC10X, the formula for the tube faceplate sagittal height, z, in millimeters, with reference to the center of the faceplate is given by:

$$Z = A_1 X^2 + A_2 X^4 + A_3 Y^2 + A_4 X^2 Y^2 + A_5 X^4 Y^2 + A_6 Y^4 + A_7 X^2 Y^4 + A_8 X^4 Y^4,$$

where X and Y are the distance coordinates, in millimeters, from the faceplate center along the major and minor axes, respectively, and where:

$A_1 = -0.236424229 \times 10^{-4}$
$A_2 = -0.363538575 \times 10^{-8}$
$A_3 = -0.422441063 \times 10^{-3}$
$A_4 = -0.213537355 \times 10^{-8}$
$A_5 = +0.883912220 \times 10^{-13}$
$A_5 = -0.100020398 \times 10^{-9}$
$A_7 = +0.117915353 \times 10^{-14}$
$A_5 = +0.527722295 \times 10^{-21}$

The picture tube faceplate defined by this formula has a relatively shallow curvature near the center of the faceplate, which increases near the edges along paths parallel to both the major and minor axes of the tube. The overall result is a faceplate of relatively flat appearance and with planar edges, namely, with points along the top, bottom, right and left edges located substantially in a common plane.

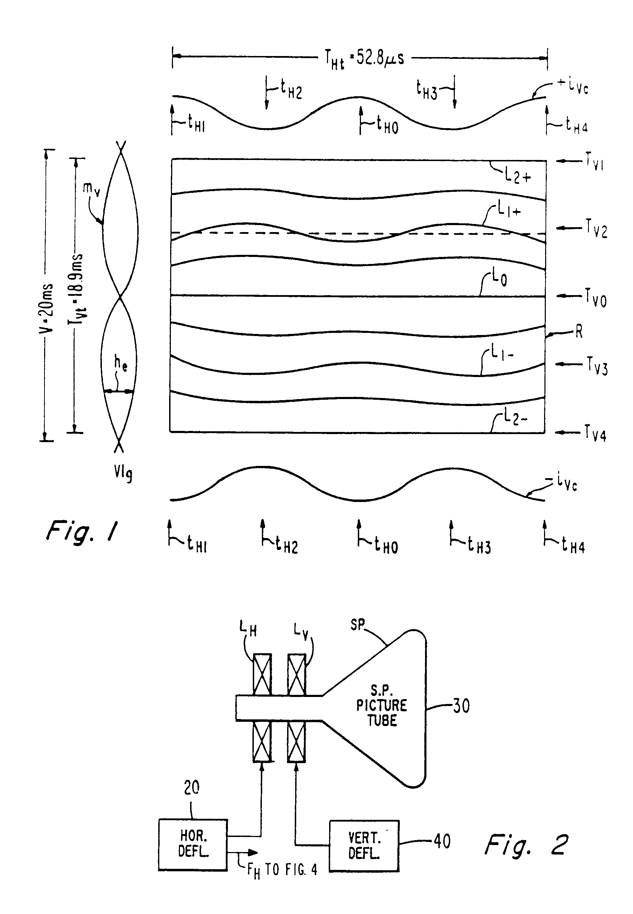

Such picture tubes may require modulation of the field deflection current for correcting a geometrical distortion defined as gullwing distortion, illustrated by the raster lines of FIGURE 1. A cause of this distortion is the difference between the beam scanning radius of curvature and the tube faceplate radius of curvature, as the electron beams scan a raster pattern.

In FIGURE 1, as is also discussed in WO 86/00170, a raster area R is schematically represented by a rectangular box that encompasses the viewing area of a faceplate 30 of a square-planar picture tube SP of FIGURE 2. Horizontal and vertical deflection circuits 20 and 40 of FIGURE 2 generate horizontal and vertical deflection currents in horizontal and vertical deflection windings $L_H$ and $L_V$, respectively. The horizontal and vertical deflection currents produce a pattern of scanned raster lines on faceplate 30.

Assuming that horizontal and vertical deflection circuits 20 and 40 correct for distortions such as east-west, north-south and S-distortion (as disclosed in US-A-4563618), the display of a pattern of horizontal raster scan lines on faceplate 30 is illustrated in FIGURE 1. The raster scan lines of FIGURE 1 exhibit a residual distortion identified as gullwing distortion.

In gullwing distortion, the vertical deviation of the electron beams scanning a given raster line, such as line $L_{1+}$, undergoes approximately two cycles of oscillation about its straight, dashed-line position in FIGURE 1. During the first half of the vertical trace interval, between time $T_{V1}$ and time $T_{V0}$, the vertical deviation of each raster line scan produces an upward excursion at intermediate points of a given line scan, near times $t_{H2}$ and $t_{H3}$ of the line trace interval, $T_{Ht}$. Maximum downward excursion of each raster line scan during the top half of vertical trace occurs at the beginning, center and end of each line scan, corresponding to times $t_{H1}$, $t_{H0}$ and $t_{H4}$, respectively.

Additionally, in gullwing distortion, the phase of the deviations of a given raster line switches by 180° when scanning from the top half of the raster to the bottom half of the raster. Thus the phase of the deviations of raster line $L_{1-}$, scanned at vertical instant $T_{V3}$, is inverted in phase relative to the excursions of the corresponding raster line $L_{1+}$, scanned at vertical instant $T_{V2}$.

When horizontal and vertical deflection circuits 20 and 40 are used in conjunction with raster scanning on faceplate 30 of square-planar picture tube SP of FIGURE 2, the effects of gullwing distortion on raster R of FIGURE 1 varies during the vertical trace interval $T_{Vt}$. Gullwing distortion is at a maximum for raster lines scanned at times intermediate the center of vertical trace and the beginning or end of vertical trace. Thus, maximum gullwing distortion or maximum deviation of a raster line occurs when scanning raster lines $L_{1+}$ and $L_{1-}$ during vertical scan instants $T_{V2}$ and $T_{V3}$.

2

Minimum or no gullwing distortion of the raster scan lines is associated with line scanning at the top, center and bottom of the raster, when scanning raster lines $L_{2+}$, $L_0$ and $L_{2-}$, during vertical scan instants $T_{V1}$, $T_{V0}$ and $T_{V4}$, respectively.

As disclosed in WO-A-86/00170, gullwing distortion that tends to occur in conjunction with raster scanning of an aspherical faceplate picture tube is compensated by a correction circuit that modulates the field deflection current. The gullwing correction circuit is responsive to a first signal that repeats at a line rate and to a second signal that repeats at a field rate, for modulating the field deflection current during a line deflection period within the field deflection trace interval. The modulation is properly phased to correct the gullwing distortion.

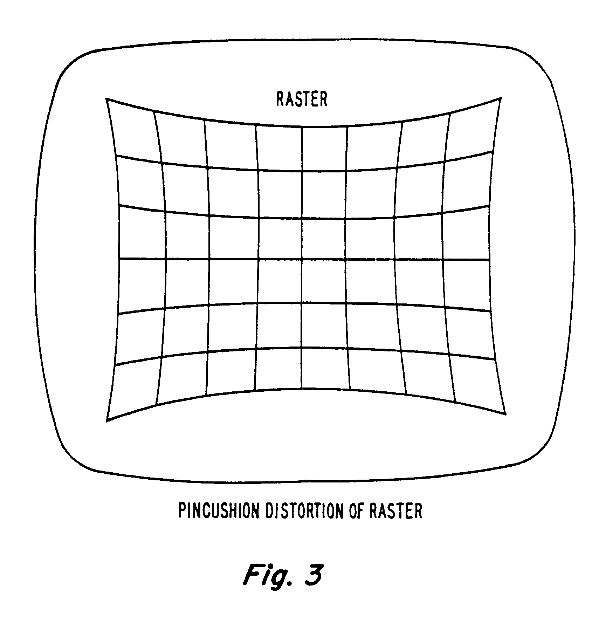

Another well-known form of raster distortion with which the present invention is concerned is pincushion distortion, and particularly, the top and bottom or N-S aspect of such distortion. This type of distortion is discussed in EP-A-201336 and is characterized by a central bowing of the raster scanning lines, the character of the bowing varying from a maximum downward bowing at the raster top through a minimum near the raster middle to a maximum upward bowing at the raster bottom. The bowing is approximately hyperbolically or parabolically shaped. FIGURE 3 illustrates the effect of both top and bottom pincushion distortion and side or E-W pincushion distortion, when left uncorrected, on the shape of stripes of a crosshatch pattern. This distortion results from the physical geometry of the deflection system as determined by such factors as the size and configuration of the target area and the relative position of an electron beam deflection center with respect to the target.

A well known solution to the top-bottom pincushion distortion problem is to modulate the vertical scanning current, at the frequency $f_V$, with a horizontal rate $f_H$ correction current. Thus, during the scanning of a horizontal scan line at the top of the screen of the CRT, for example, the horizontal rate correction current causes a varying change in the vertical scanning current. The varying change is such that at the center of such horizontal line, the vertical scanning current is larger than at the edges. Thus, the center portion of such horizontal scan line is displayed further from the horizontal center of the screen of the CRT. Consequently, the bow-shaped horizontal scan line is modified to appear closer to a horizontal straight line.

EP-A-201336 discloses a combined top and bottom pincushion and gullwing distortion correction circuit which uses a nonlinear reactor to introduce an appropriately modulated horizontal frequency and second harmonic of the horizontal frequency component into the vertical scanning current path. The nonlinear reactor is preferably a transformer with a secondary that provides a correction voltage in series with the vertical scanning current path. The transformer effectively has two series opposing primary windings magnetically coupled to the secondary. These primaries, energized by waves at the horizontal frequency and the second harmonic frequency, alternately predominate over each other to a variable degree, and in a manner determined by the vertical scanning current, for inducing corresponding voltage at the secondary winding.

In accordance with the present invention, there is provided a television deflection apparatus with gullwing and N-S pincushion raster distortion corrections, comprising: a first source of an input signal at a horizontal deflection frequency; a second source of an input signal at a vertical deflection frequency; means responsive to said signals that are produced by said first and second sources for generating, in accordance with said gullwing raster distortion, a gullwing raster distortion correction signal at a third frequency that is a multiple of said horizontal deflection frequency that is modulated in accordance with said signal that is produced by said second source; means responsive to said signals that are produced by said first and second sources for generating, in accordance with said pincushion raster distortion, a pincushion raster distortion correction signal at said horizontal deflection frequency that is modulated in accordance with said signal that is produced by said second source; a deflection circuit output stage responsive to said signal at said vertical deflection frequency that includes a deflection winding for generating a deflection current in said deflection winding at said vertical deflection frequency; characterized by a winding of a transformer coupled to said deflection winding; and means responsive to said gullwing and pincushion raster distortion correction signals for applying each substantially by means of a transformer action of said transformer to said first winding to generate in said first winding, in accordance with said gullwing and pincushion raster distortion correction signals, a modulation voltage that modulates said deflection current in a manner that provides correction of said gullwing and pincushion raster distortions such that a given winding turn of said first winding develops a voltage thereacross that is representative of both said gullwing and pincushion raster distortion correction signals.

In the Drawing:
FIGURE 1 illustrates the raster pattern of gullwing distortion appearing on an aspherical faceplate of a square-planar picture tube;
FIGURE 2 illustrates in block diagram form raster scanning circuitry used in conjunction with raster

EP 0 284 348 B1

scanning on an aspherical faceplate of a square-planar picture tube;

FIGURE 3 illustrates pincushion distortion of a raster;

FIGURE 4 illustrates a detailed embodiment of the vertical deflection circuit of FIGURE 2, including circuitry, embodying the invention, that corrects gullwing distortion;

FIGURES 5a-5j illustrate waveforms at the vertical frequency that are useful for explaining the operation of the circuit of FIGURE 4; and

FIGURES 6a-6j illustrates waveforms at the horizontal frequency and at twice the horizontal frequency that are useful for explaining the operation of the circuit of FIGURE 4.

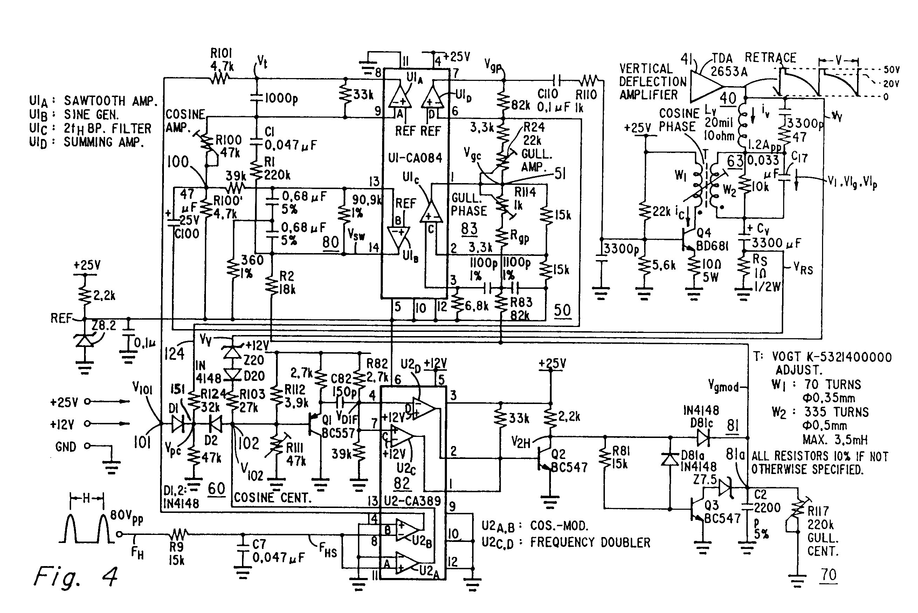

In a deflection circuitry illustrated in FIGURE 4, a vertical deflection circuit 40 includes a vertical deflection amplifier 41 that generates vertical deflection current $i_v$ in a vertical deflection winding $L_V$. A combined pincushion and gullwing distortion correction circuit 70, embodying the invention, modulates vertical deflection current $i_v$ by applying a gullwing modulation voltage component $V1_g$, of a gullwing and pincushion modulation voltage V1 that is developed across a capacitor $C_{17}$, to vertical deflection winding $L_V$. To provide north-south pincushion raster distortion correction, correction circuit 70 modulates vertical deflection current $i_v$ by applying to vertical deflection winding $L_V$ a north-south correction voltage component $V1_p$ of voltage V1. Vertical deflection current $i_v$ flows to ground via a coupling capacitor $C_V$ and a current sampling resistor $R_s$.

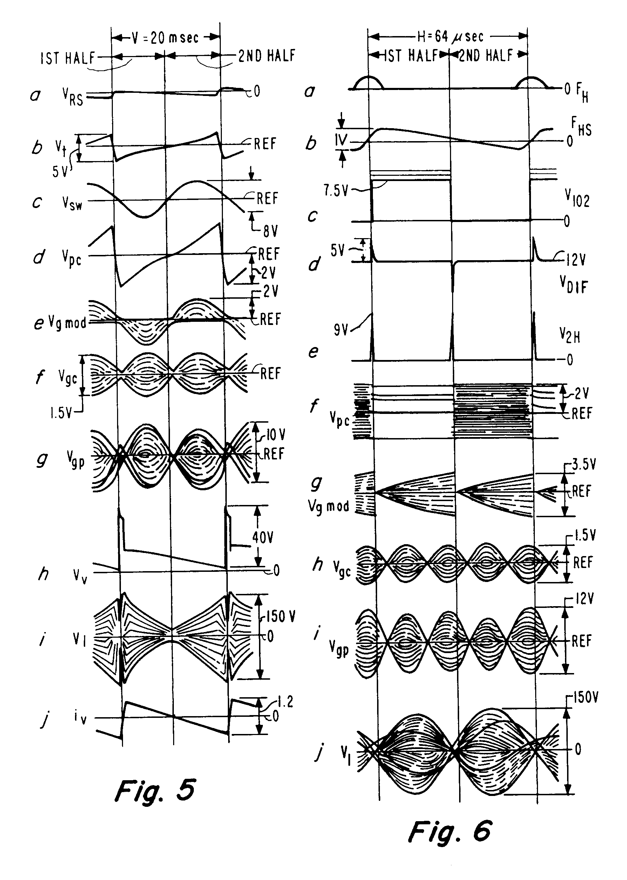

FIGURES 5a-5j and 6a-6j illustrate waveforms useful in explaining the operation of correction circuit 70 of FIGURE 4. Similar numbers and symbols in FIGURES 4, 5a-5j and 6a-6j illustrate similar items or functions.

North-south pincushion correction of vertical deflection current $i_v$ of FIGURE 4 is provided by a raster distortion correction circuit 70 that generates a north-south modulation voltage component $V1_p$ across capacitor $C_{17}$ that together with gullwing modulation voltage component $V1_g$ is applied to vertical deflection winding $L_V$. North-south modulation voltage component $V1_p$ is a line frequency, sinusoidal voltage, phased by LC resonant circuit 63 to have a zero crossing near the center of the horizontal trace interval. The amplitude envelope of line frequency voltage component $V1_p$ is made to vary at a vertical rate in a generally sawtooth manner, having maximum envelope height near the top and bottom of the raster and zero height near the center. To generate modulation voltage component $V1_p$, raster distortion correction circuit 70 includes a pincushion modulation control circuit 60 that generates a north-south pincushion modulation voltage $V_{pc}$ at a terminal 151, as described below.

A sawtooth signal $V_{RS}$ of FIGURE 5a that is developed across resistor $R_s$ of FIGURE 4 is AC coupled via a capacitor C100 to a junction terminal 100 that is coupled to a cosine amplitude control resistor R100 Resistor R100, that is coupled to an inverting input terminal of an operational amplifier $U1_A$, forms with amplifier $U1_A$ an inverting amplifier that generates a vertical rate inverted sawtooth signal $V_t$ of FIGURE 5b. The peak-to-peak amplitude of signal $V_t$ is adjustable by adjusting variable resistor R100 of FIGURE 4 that controls the input level of the amplifier.

The noninverting input terminal of amplifier $U1_A$ is coupled to a DC reference voltage REF that is developed across a zener diode Z8.2. Sawtooth signal $V_{RS}$ is AC coupled through capacitor C100 and DC reference voltage REF is added via resistor R100′ to the inverting input terminal of amplifier $U_{1A}$. Therefore, signal $V_t$ that is developed at an output terminal of amplifier $U_{1A}$ is also a sawtooth signal having a portion that is more positive than voltage REF and a second, substantially symmetrical portion, that is less positive than reference voltage REF. In this way, sawtooth signal $V_t$ has an average value that is equal to voltage REF as shown in Figure 5b. Signal $V_t$ of FIGURE 4 is coupled through resistor R101 to a junction terminal 101 of pincushion modulation control circuit 60. Terminal 101 is coupled to an output terminal of a comparator $U2_B$. As described below, comparator $U2_B$, operating as a switch, is responsive to horizontal retrace pulses $F_H$.

Horizontal retrace pulses $F_H$ of FIGURE 6a, that are generated in, for example, a flyback transformer of a horizontal deflection circuit 20 of FIGURE 2, are coupled to an integrating network that is formed by a resistor R9 and a capacitor C7 of FIGURE 4. Similar numbers and symbols in FIGURES 2 and 4 indicate similar items or functions. Consequently, a sawtooth signal $F_{HS}$ of FIGURE 6b at a horizontal rate $f_H$ is developed across capacitor C7 of FIGURE 4 having an average value that is equal to zero. Signal $F_{HS}$ is coupled to an inverting input terminal of comparator $U2_B$ and to a noninverting input terminal of a comparator $U2_A$ The other corresponding input terminals of comparators $U2_A$ and $U2_B$ are coupled to ground and therefore are at zero volts. Consequently, terminal 101 is grounded by the output terminal of comparator $U2_B$, that operates as a conductive switch during a first half, and as a nonconductive switch during a second half, of each horizontal period H of FIGURE 6a.

During the second half of each horizontal period H, when comparator $U2_B$ of FIGURE 4 operates as a nonconductive switch, signal $V_t$ is coupled through a diode D1 to terminal 151 to form, in each period H, a

4

first portion of a north-south pincushion modulation signal $V_{pc}$ of FIGURE 6f, that was mentioned before. During the first half of period H, grounded terminal 101 is decoupled from terminal 151 by back biased diode D1.

A fixed resistor R112 of FIGURE 4 and a variable resistor R111 form a voltage divider that develops at terminal 102 a signal $V_{102}$ at a level that is adjustable. Terminal 102 is coupled to an output terminal of a comparator $U2_A$. Comparator $U2_A$, operating as a switch that is coupled between ground and terminal 102, causes terminal 102 to be at, approximately, ground potential during the second half of each horizontal period H of FIGURE 6c. Consequently, terminal 102 is decoupled from terminal 151 by back biased diode. Thus, during the first half of each horizontal period H, that occurs during vertical trace, signal $V_{102}$ at terminal 102 that is close in value to that of reference voltage REF is coupled through diode D2 to terminal 151 to form a second portion of pincushion modulation signal $V_{pc}$, as shown in FIGURE 6f. As described before, during the second half of each horizontal period H, signal $V_t$ is coupled to terminal 151 instead of signal $V_{102}$ to form the first portion of signal $V_{pc}$.

North-south pincushion modulation signal $V_{pc}$ of FIGURE 4 is coupled via a resistor R124 to an inverting input terminal of an amplifier $U1_D$. Amplifier $U1_D$, that is coupled in a configuration of a linear inverting amplifier, generates an output signal $V_{gp}$ having a corresponding signal component that is linearly proportional to signal $V_{pc}$.

Signal $V_{gp}$ is AC coupled through capacitor C110 and resistor R110 to the base of a power transistor $Q_4$ that operates in the class A mode. Transistor $Q_4$ is coupled to the primary winding $W_1$ of a transformer T. The secondary winding $W_2$ of transformer T is coupled in series with vertical deflection winding $L_V$. Secondary winding $W_2$ of transformer T forms with capacitor $C_{17}$ an LC resonant circuit 63 that is tuned to the line frequency $f_H$.

In response to line rate, square-wave component voltage of signal $V_{pc}$, shown in Fig. 6f, power transistor $Q_4$ generates a collector current $i_c$ that excites resonant circuit 63 into oscillation at the line rate to generate north-south modulation voltage component $V1_p$ having a sinewave waveform at the frequency $f_H$ that is applied to vertical deflection winding $L_V$. The amplitude envelope variation at the vertical rate of voltage component $V1_p$ is accomplished in accordance with the vertical rate variation of the amplitude of signal $V_{pc}$. Phase variation of voltage component $V1_p$ is adjustable by varying the inductance of winding $W_2$.

Sinewave, north-south modulation voltage component $V1_p$, when applied to vertical deflection winding $L_V$, generates a cosine north-south correction modulation current component in field deflection current $i_V$ that is phase shifted by 90° from voltage $V1_p$. Thus, with respect to line scanning instants $t_{H1}$ through $t_{H4}$ of FIGURE 1, the north-south correction current component of vertical deflection current $i_V$ reaches maximum magnitude at the center of horizontal trace at time $t_{H0}$.

During the first half of each horizontal period H of FIGURE 6f, that occurs during vertical trace, signal $V_{pc}$ is substantially equal to voltage REF, as described before. During the second half of those horizontal periods H that occur during the first half of vertical trace, the level of signal $V_{pc}$ is less positive than its level in the first half of such period H; whereas, during the second half of those horizontal periods H that occur during the second half of vertical trace, the level of signal $V_{pc}$ is more positive then its level in the first half of such period H. Thus, the horizontal rate phase of signal $V_{pc}$ reverses by 180° at a corresponding crossover point that occurs when signal $V_t$ of FIGURE 5b becomes equal to voltage REF. A second such crossover point occurs during vertical retrace. Adjusting resistor R111 varies signal $V_{102}$, and thus varies the time within vertical trace when the first crossover point occurs. In this way, adjusting resistor R111, advantageously, provides north-south pincushion or cosine centering.

The horizontal rate peak-to-peak amplitude of signal $V_{pc}$ of FIGURE 4 in a given period H is equal to the difference between the level of signal $V_{pc}$ of FIGURE 6f, that occurs during the first half of the given horizontal period H that, as described before, is approximately equal to constant voltage REF, and its level during the second half of such horizontal period H. During the second half, the level of signal $V_{pc}$ is proportional to signal $V_t$ of FIGURE 5b. As described before, signal $V_t$ is a sawtooth signal having an average value that is approximately equal to voltage REF. It follows that the vertical rate envelope of the peak-to-peak magnitude of signal $V_{pc}$ of FIGURE 5d decreases gradually in a vertical rate ramping manner from the beginning of vertical trace toward its center where the first phase crossover point occurs. Similarly, it increases gradually in the vertical rate ramping manner from the center of vertical trace toward the end of vertical trace.

North-South modulation voltage component $V1_p$ changes by 180° approximately at the center of the raster. The time when the phase reversal occurs is controlled by adjusting resistor R111, as described before. Also, the phase has to change back again by 180° immediately prior to the beginning of the following vertical scanning. Hence, it has to change by 180° during, for example, vertical retrace.

The response of voltage component $V1_p$ to the abrupt change by 180° of the phase of voltage $V_{pc}$ that occurs during vertical retrace may not be sufficiently fast. Because the amplitude of voltage component $V1_p$ is at its maximum prior to vertical retrace, a slow response to such change in phase, if not speeded-up, disadvantageously, might introduce raster distortions at the top of the raster. Therefore, it may be desirable to advance the time when such phase reversal begins, to allow a longer response time for reversing such phase during vertical retrace. During vertical retrace the phase reversal in voltage component $V1_p$ begins to occur when downramping signal $V_t$ of FIGURE 5b becomes equal to the voltage at terminal 102.

In accordance with an aspect of the invention, a series arrangement of a zener diode Z20, a diode D20 and a resistor R103 is coupled between terminal 102 and an output terminal of vertical deflection amplifier 41 where a vertical rate signal $V_v$ of FIGURE 5h is developed. A portion of a corresponding retrace pulse of signal $V_v$ that causes zener diode Z20 to conduct is coupled to terminal 102 that makes the voltage at terminal 102 more positive during vertical retrace than during vertical trace. It follows that signal $V_t$ of FIGURE 5b becomes equal to the voltage at terminal 102 earlier within vertical retrace than if the vertical retrace pulse of signal $V_v$ were not coupled to terminal 102. It follows that the time, during vertical retrace, when the phase reversal, or the second crossover point occurs in both signal $V_{pc}$ of FIGURE 4 and in voltage component $V1_p$ across capacitor $C_{17}$ is, advantageously, advanced. Thus, the phase reversal is, advantageously, speeded-up.

To correct gullwing raster distortion, combined pincushion and gullwing correction circuit 70 modulates vertical deflection current $i_v$, during each line deflection period within the field deflection trace interval in the manner illustrated by the current $i_{vc}$, illustrated in FIGURE 1 by the two current waveforms $\pm i_{vc}$. Current $i_{vc}$ represents a line repetitive modulation component of the vertical deflection current wherein approximately two cycles of oscillation of modulation current $i_{vc}$ is developed during the line trace interval $T_{Ht}$.

To correct gullwing distortion of the raster lines, the modulation current component $i_{vc}$ is 180° out-of-phase with the oscillatory vertical deviations of the corresponding raster lines. Thus, for the lines scanned in the top half of the raster, such as raster line $L_{1+}$, modulation current component $+i_{vc}$ reaches its negative minima AC-wise near the line trace instants $t_{H2}$ and $t_{H3}$, and reaches its positive maxima near times $t_{H1}$, $t_{H0}$ and $t_{H4}$. For lines scanned in the bottom half of raster R, the modulation current component is the phase inverted current $-i_{vc}$, reaching maxima near times $t_{H2}$ and $t_{H3}$ and minima near times $t_{H1}$, $t_{H0}$ and $t_{H4}$.

In addition, to provide gullwing distortion correction of a raster displayed on the aspherical faceplate of a square-planar picture tube, the amplitude envelope $m_V$ of modulation current component $i_{vc}$ is varied in envelope height during the vertical trace interval $T_{Vt}$ in the manner illustrated in FIGURE 1. The height of the modulation envelope undergoes approximately two cycles of oscillation, achieving maximum height near times $T_{V2}$ and $T_{V3}$, corresponding to the scanning of raster lines $L_{1+}$ and $L_{1-}$. The modulation envelope reaches zero or near zero height near the center of vertical trace, time $T_{V0}$, when scanning raster line $L_0$ and near the top and bottom of the raster, near times $T_{V1}$ and $T_{V4}$, when scanning raster lines $L_{2+}$ and $L_{2-}$. Other modulation envelopes may be generated to correct gullwing distortion for television systems that require different envelop vertical variations.

To generate modulation current component $i_{vc}$, having a modulation envelope $m_V$, distortion correction circuit 70 includes a gullwing modulation control circuit 50 that generates at a terminal 51 a gullwing modulation signal $V_{gc}$. Gullwing modulation control circuit 50 includes a sinewave generator 80 that generates a sinewave signal $V_{SW}$ at an output terminal of an amplifier $U1_B$ having a sinewave waveform that is shown in FIGURE 5c.

The sawtooth waveform of signal $V_{RS}$ that is developed across resistor $R_s$ is AC coupled through capacitor C100 to terminal 100 of generator 80. Generator 80 forms sinewave signal $V_{SW}$ by double integrating sawtooth signal $V_{RS}$. Sinewave signal $V_{SW}$ is coupled via a resistor R1 and a capacitor C1 to the inverting input terminal of amplifier $U1_A$.

In accordance with a feature of the invention, signal $V_{SW}$ is added in amplifier $U1_A$ to the vertical sawtooth that, as described before, is coupled to terminal 100, thus, advantageously, providing S-correction. Consequently, as shown in FIGURE 5b, the trace portion of signal $V_t$ is not a straight line; rather, it includes a sinewave voltage component.

Horizontal rate signal $V_{102}$ of FIGURE 6c having approximately 50% duty cycle is coupled via a transistor Q1 of FIGURE 4 operating as an emitter follower to a differentiation network that includes a capacitor C82 and a resistor R82. The differentiation network produces a signal $V_{DIF}$ having a positive going narrow pulse when a positive going transition occurs in signal $V_{102}$ and a negative going narrow pulse when a negative going transition occurs in signal $V_{102}$. Signal $V_{DIF}$ of FIGURE 6d is coupled via a comparators $U2_C$ and $U2_D$ of FIGURE 4, having corresponding output terminals that are coupled together, to the base electrode of a transistor Q2.

In carrying out a yet further aspect of the invention, comparators $U2_C$ and $U2_D$ operate as a frequency doubler to produce a signal $V_{2H}$ of FIGURE 6e at the frequency $2 \times f_H$ that is used for gullwing distortion correction and that is developed at the collector electrode of transistor Q2 of FIGURE 4. Signal $V_{2H}$ of FIGURE 6e contains a positive narrow pulse when each signal transition occurs in signal $V_{102}$ of FIGURE 6c. The narrow pulses of signal $V_{2H}$ that occur at the frequency $2 \times f_H$ are coupled to a gullwing modulator 81.

A resistor R2 of gullwing modulator 81, embodying an additional aspect of the invention, has a terminal that is driven by sinewave signal $V_{SW}$, that was described before, and a second terminal 81a, that is coupled to a plate of an integrating capacitor C2. The other plate of capacitor C2 is grounded. Consequently, during each one-half of period H, capacitor C2 is charged in an upramping manner when sinewave signal $V_{SW}$ is more positive than voltage REF, and in a downramping manner when it is less positive than voltage REF, to develop at terminal 81a a first portion of a sawtooth signal $V_{gmod}$.

A switching transistor Q3 has an emitter that is grounded and a collector that is coupled through a zener diode Z7.5 to terminal 81a. The base of transistor Q3 is coupled through a resistor R81 to signal $V_{2H}$. Transistor Q3 and diode Z7.5 clamp or establish signal $V_{gmod}$ at terminal 81a of capacitor C2 to be approximately at the same level as reference voltage REF each time the corresponding narrow pulse of signal $V_{2H}$ of FIGURE 6e occurs. Consequently, a second portion of sawtooth signal $V_{gmod}$ is formed that changes in the opposite direction to that of the first portion. For example, when sinewave signal $V_{SW}$ of FIGURE 5c is less positive than voltage REF, the positive pulse of signal $V_{2H}$ of FIGURE 6e is coupled through a diode D81c of FIGURE 4 to terminal 81a to charge capacitor C2 to the clamping level that is approximately equal to voltage REF and that is established by zener diode Z7.5.

During the corresponding portion of each half of period H, when the corresponding positive pulse of signal $V_{2H}$ does not occur, signal $V_{gmod}$ at terminal 81a is upramping if sinewave signal $V_{SW}$ is then positive relative to voltage REF, and is downramping signal if signal $V_{SW}$ is then negative relative to voltage REF. The magnitude or peak of signal $V_{gmod}$ of FIGURE 6g that occurs immediately prior to the occurrence of the clamping operation of transistor Q3 of FIGURE 4 during each half of period H of FIGURE 6g is determined by the level of vertical rate sinewave signal $V_{SW}$ of FIGURE 5c at that time. When the polarity of signal $V_{SW}$ of FIGURE 4 reverses, the phase of signal $V_{gmod}$ also reverses by 180°. Consequently, sawtooth signal $V_{gmod}$ that occurs at twice the horizontal rate is amplitude modulated in accordance with the current value of signal $V_{SW}$. Phase reversal in signal $V_{gmod}$ occurs approximately at the center of vertical trace.

Modulated signal $V_{gmod}$ is coupled through a resistor R83 to an active bandpass filter 83 having a center passing frequency at $2 \times f_H$ that, in, for example, the PAL standard, is 31.25 KHZ. Filter 83 produces, from signal $V_{gmod}$, gullwing correction signal $V_{gc}$ at terminal 51. In signal $V_{gc}$, vertical rate and quadruple horizontal rate signal components and their respective harmonics are, advantageously, substantially removed or highly attenuated. Fine adjustment of the phase of signal $V_{gc}$ relative to horizontal deflection current in deflection winding $L_H$ of FIGURE 2 is accomplished by varying a resistor R114 of bandpass filter 83 of FIGURE 4.

In accordance with an aspect of the invention, gullwing modulation signal $V_{gc}$ is coupled to the inverting input terminal of amplifier $U1_D$ where it is summed with north-south pincushion modulation signal $V_{pc}$ to develop, at the output terminal of amplifier $U1_D$, signal $V_{gp}$ that contains the sum of both and that provides both gullwing and pincushion distortion correction. As described before, signal $V_{gp}$ is coupled to the base of transistor Q4. Because transistor Q4 operates as a linear amplifier, the corresponding collector current component of collector current $i_c$ of transistor Q4 that is at the frequency $2 \times f_H$ and that is coupled to winding $W_1$ is, advantageously, amplified without distortion.

Gullwing modulation voltage component $V1_g$ is developed across winding $W_2$ of transformer T by a transformer action, as a result of the corresponding current component of collector current $i_c$ in transistor Q4 that is modulated by signal $V_{gc}$ at terminal 51. Gullwing correction voltage component $V1_g$ that is applied to vertical deflection winding $L_V$ modulates vertical deflection current $i_V$. The vertical rate amplitude modulation of voltage component $V1_g$ enables distortion correction circuit 70 to produce a vertical rate modulation envelope of the gullwing correction current $i_{Vc}$ of FIGURE 1.

In carrying out another aspect of the invention, voltage component $V1_g$ that provides gullwing distortion correction, and voltage component $V1_p$, that provides pincushion distortion correction, are formed by the transformer action of transformer T. Each of voltage components $V1_g$ and $V1_p$ includes a corresponding portion that is developed across each winding turn of the same winding such as, for example, winding $W_2$ of transformer T. Thus, advantageously, only one transformer such as, for example, transformer T is required for generating both voltage components $V1_g$ and $V1_p$ that form the combined modulation voltage V1 that is coupled to deflection winding $L_V$.

Modulator 81 of FIGURE 4 functions as a suppressed carrier modulator. Therefore, the phase of gullwing correction voltage component $V1_g$ switches 180° near the center of vertical trace at an instant that is controlled by adjusting resistor R117 that is coupled to terminal 81a. This phase change enables correction circuit 70 to change the phase of gullwing correction current $i_{vc}$ at the center of vertical trace, from $+i_{vc}$ to $-i_{vc}$, as is required for proper gullwing distortion correction.

Signal $V_{pc}$ that provides pincushion distortion correction contains, advantageously, substantially no signal components at the frequency $2 \times f_H$, or at other even harmonics, that may adversely affect gullwing distortion correction because it is substantially a square-wave waveform having a 50% duty cycle. Advantageously, gullwing modulating signal $V_{gc}$ contains substantially no signal components at the horizontal frequency $f_H$ because signal $V_{102}$, that is coupled to frequency doubler 82, has a 50% duty cycle. Because signals $V_{gc}$ and $V_{pc}$ are coupled to winding $W_2$ through linear stages, advantageously, no cross modulation occurs that could adversely affect raster distortion correction.

The signal component at the frequency $f_H$, but not that at the frequency $2 \times f_H$, of signal $V_{gp}$ that is developed at the output terminal of amplifier $U1_D$ is, advantageously, amplified by the resonance action of circuit 63 that forms a high impedance at the collector of transistor Q4 at the frequency $f_H$. The signal component at the frequency $2 \times f_H$ need not be amplified, since only a small gullwing signal amplitude is required for gullwing distortion correction. Additionally, because circuit 63 is tuned to the frequency $f_H$ that is substantially lower than that of voltage component $V1_g$, the phase of voltage component $V1_g$ is, advantageously, unaffected by adjusting the inductance of winding $W_2$. As indicated before, the phase of voltage component $V1_p$ is adjusted by varying the inductance of winding $W_2$ to provide properly phased pincushion distortion correction.

As a result of the double integration operation of sinewave generator 80, sinewave signal $V_{SW}$ of FIGURE 5c causes the peak-to-peak amplitude of gullwing modulation signal $V_{gc}$ of FIGURE 5f to be at a corresponding maximum when the gullwing distortion in the aspherical faceplate picture tube 30 of FIGURE 2 is at a maximum. Thus, signal $V_{gc}$ and voltage component $V1_g$ of FIGURE 1 are, advantageously, at a corresponding maximum when vertical scanning is approximately one-third down from the top edge of the raster and also when it is one third up from the bottom edge of the raster. Signal $V_{gc}$ of FIGURE 5f and voltage component $V1_g$ of FIGURE 1 have advantageously, minimum peak-to-peak amplitude during vertical scanning of each of the top, bottom and center of the raster where no gullwing correction is required.

**Claims**

1. A television deflection apparatus with gullwing and N-S pincushion raster distortion corrections, comprising:

a first source (R9,C7) of an input signal ($F_{HS}$) at a horizontal deflection frequency;

a second source ($R_S$) of an input signal ($V_{RS}$) at a vertical deflection frequency;

means ($U2_{C,D}$) responsive to said signals that are produced by said first and second sources for generating, in accordance with said gullwing raster distortion, a gullwing raster distortion correction signal at a third frequency ($2f_H$) that is a multiple of said horizontal deflection frequency ($f_H$) that is modulated in accordance with said signal ($V_{RS}$) that is produced by said second source ($R_S$);

means ($U2_{A,B}$) responsive to said signals that are produced by said first and second sources for generating, in accordance with said pincushion raster distortion, a pincushion raster distortion correction signal ($V_{PC}$) at said horizontal deflection frequency that is modulated in accordance with said signal ($V_{RS}$) that is produced by said second source ($R_S$);

a deflection circuit output stage (40) responsive to said signal ($V_{RS}$) at said vertical deflection frequency that includes a deflection winding ($L_V$) for generating a deflection current in said deflection winding at said vertical deflection frequency; characterized by

a winding ($W_2$) of a transformer (T) coupled to said deflection winding ($L_V$); and

means (63) responsive to said gullwing and pincushion raster distortion correction signals for applying each substantially by means of a transformer action of said transformer (T) to said first winding ($W_2$) to generate in said first winding, in accordance with said gullwing and pincushion raster distortion correction signals, a modulation voltage ($V_1$) that modulates said deflection current ($i_V$) in a manner that provides correction of said gullwing and pincushion raster distortions such that a given winding turn of said first winding ($W_2$) develops a voltage thereacross that is representative of both said gullwing and pincushion raster distortion correction signals.

2. An apparatus according to claim 1 characterized in that said deflection winding ($L_V$) provides vertical deflection for a square-planar picture tube (SP).

3. An apparatus according to claim 1 characterized by combining means ($V1_D$) for combining said gullwing ($V_{gc}$) and pincushion ($V_{PC}$) distortion correction signals to generate a combined signal ($V_{gp}$)

that is coupled to said first winding (W2) such that a signal path, that is formed between each of said gullwing and pincushion distortion correction signals and said first winding, is linear, so as to prevent said modulation voltage from being distorted in said signal path.

4. An apparatus according to claim 1, characterized by a capacitance ($C_{17}$) coupled to said first winding (W2) to form a resonant circuit (63) that is tuned to a horizontal deflection frequency ($f_H$) for amplifying by a resonance action of said resonant circuit an amplitude of a voltage component ($V1_p$) of said modulation voltage (V1) that provides said north-south pincushion distortion correction.

5. An apparatus according to claim 4 characterized in that said first winding (W2) and said capacitance ($C_{17}$) are coupled in parallel to form said resonant circuit (63).

6. An apparatus according to claim 4 characterized in that a voltage component ($V1_g$) of said modulation voltage (V1) that provides gullwing distortion correction is at a harmonic of said horizontal frequency ($f_H$) and has an amplitude that is modulated at a vertical rate.

7. An apparatus according to claim 1 characterized by a summing amplifier ($V1_D$) responsive to said correction signals ($V_{PC}, V_{gc}$) for generating a sum signal ($V_{gp}$) thereof that is coupled to a second winding (W1) of said transformer (T).

8. An apparatus according to claim 7 characterized by a transistor (Q4) having a control electrode (base) that is coupled to said sum signal ($V_{gp}$) and a main current conducting electrode (collector) that is coupled to said second winding ($W_1$) of said transformer (T) to generate in said second winding ($W_1$) a first current component at a horizontal frequency that corresponds with said pincushion distortion correction signal ($V1_p$) and a second current component at a higher harmonic of said horizontal frequency that corresponds with said gullwing distortion correction signal ($V1_g$).

9. An apparatus according to claim 8 characterized by a capacitance ($C_{17}$) coupled to said first winding (W2) to form a resonant circuit (63) that is tuned to said horizontal frequency such that a ratio between an amplitude of a voltage component of said modulation voltage (V1) that correspond with said pincushion distortion correction signal ($V1_p$) and that of said first current component is, as a result of said resonant circuit (63) being in resonance, substantially higher than a corresponding ratio between an amplitude of a voltage component of said modulation voltage (V1) that corresponds with said gullwing distortion correction signal ($V1_g$) and that of said second current component.

10. An apparatus according to claim 1 characterized in that said deflection circuit output stage (40) generates said deflection current ($i_V$) at a vertical rate.

11. An apparatus according to claim 10 characterized in that said gullwing distortion correction signal generating means comprises a sinewave generator (80) responsive to said deflection current for generating a sinewave signal ($V_{SW}$) at a frequency that is related to said vertical rate, a frequency doubler ($U2_{C,D}$) responsive to said input signal at said frequency that is related to said horizontal frequency for generating a signal at a harmonic of said horizontal frequency, and a modulator (81) responsive to said sinewave signal ($V_{SW}$) and to said signal ($V_{2H}$) at said harmonic for generating said gullwing distortion correction signal ($V_{gmod}$) by amplitude modulating said harmonic signal in accordance with said sinewave signal ($V_{SW}$).

12. An apparatus according to claim 11 characterized by said frequency doubler comprises means ($U2_A$) responsive to a signal at said horizontal frequency for generating a square-wave signal ($V_{102}$) at said horizontal frequency having approximately a 50% duty cycle, and means ($Q1, U2_{C,D} Q2$) responsive to said square-wave signal ($V_{102}$) for generating an output pulse ($V_{2H}$) of said signal at said harmonic when each transition edge occurs in said square-wave signal ($V_{102}$).

13. An apparatus according to claim 12 characterized in that said modulator (81) comprises a capacitance (C2) coupled to said sinewave signal ($V_{SW}$) for generating a second sawtooth signal ($V_{gmod}$) in said capacitance (C2) at double the horizontal frequency having a portion that ramps in a first direction at a rate that is determined by said sinewave signal ($V_{SW}$), said modulator being responsive to said output pulse of said harmonic signal that causes said second sawtooth signal ($V_{gmod}$) to ramp in an opposite direction when said pulse of said harmonic signal that is generated by said frequency doubler occurs.

**14.** An apparatus according to claim 13 characterized in that said modulator (81) further comprises, level clamping means (Z7.5) responsive to said pulse of said frequency doubler for clamping a level of said second sawtooth signal ($V_{gmod}$) to be at a predetermined level prior to a beginning time of said portion of said sawtooth signal that ramps in said first direction, and adjustable means (R117) for adjusting said predetermined level of said sawtooth signal to provide gullwing distortion correction centering.

**15.** An apparatus according to claim 11 characterized by a bandpass filter (83) coupled to said modulator (81) having a bandpass frequency range that is centered around a frequency ($2f_H$) that is equal to twice the horizontal frequency for filtering out component signals outside said bandpass frequency range from said gullwing distortion correction signal, and means (R114) coupled to said modulator (81) for adjusting a phase of said gullwing distortion correction signal relative to that of said input signal that is at said horizontal frequency.

**16.** An apparatus according to claim 11 characterized in that said sinewave generator (80) is responsive to a sawtooth signal ($V_{RS}$) that is proportional to said deflection current ($i_v$) and that is developed in said output stage (40) to generate said sinewave signal by double integrating said sawtooth signal.

**17.** An apparatus according to claim 11 characterized by means ($R_S$) responsive to said deflection current ($i_v$) for generating a sawtooth signal ($V_{RS}$) that is coupled to said modulator (81) to provide S- distortion correction.

**18.** An apparatus according to claim 10 characterized in that said pincushion distortion correction signal generating means comprises means ($U2_{A,B}$) responsive to said input signal ($F_{HS}$) at said frequency that is related to said horizontal frequency for generating a square-wave signal ($V_{102}$) having 50% duty cycle at said horizontal frequency, and a modulator (60) responsive to a sawtooth signal ($V_{RS}$) at said vertical rate, that is generated in said output state (40) and to said square-wave signal ($V_{102}$) for generating said pincushion distortion correction signal ($V_{pc}$) by amplitude modulating said square-wave signal ($V_{102}$) in accordance with said sawtooth signal ($V_{RS}$).

**19.** An apparatus according to claim 18 characterized in that said modulator (60) of said pincushion distortion correction signal generating means comprises first switching means (D2) responsive to said square-wave signal ($V_{102}$) at said horizontal frequency for generating, during a first portion of a given horizontal period, a corresponding portion of said square-wave signal ($V_{102}$) at a level that is determined by a level of said sawtooth signal, and during a second portion of said given horizontal period, a corresponding portion of said square-wave signal at a level that, during each vertical trace interval of said deflection current, is substantially constant.

**20.** An apparatus according to claim 19 characterized by means (41) coupled to said output stage (40) for generating a signal ($V_V$) that is representative of a vertical retrace pulse in said output stage, said retrace pulse representative signal ($V_V$) being coupled to said first switching means (D2) to control said level of said square-wave signal during said second portion of said given horizontal period that advances, during said vertical retrace, a time when phase reversal occurs in a component current of said deflection current that provides pincushion distortion correction.

**Patentansprüche**

**1.** Fernsehablenkvorrichtung mit Korrektur der Möwenflügel-und N-S-Kissenverzerrung des Rasters;
mit einer ersten Quelle (R9, C7) zur Erzeugung eines Eingangssignals ($F_{HS}$) mit einer Horizontal-Ablenkfrequenz;
mit einer zweiten Quelle ($R_S$) zur Erzeugung eines Eingangssignals ($V_{RS}$) mit einer Vertikal-Ablenkfrequenz;
mit Mitteln ($U2_{C,D}$), die auf die von der ersten und zweiten Quelle erzeugten Signale ansprechen, um gemäß der Möwenflügel-Rasterverzerrung ein Möwenflügel-Rasterverzerrungs-Korrektursignal mit einer dritten Fequenz ($2f_H$) zu erzeugen, die ein Vielfaches der Horizontal-Ablenkfrequenz ($f_H$) ist, das gemäß dem von der zweiten Quelle ($R_S$) erzeugten Signal ($U_{RS}$) moduliert wird;
mit Mitteln ($U2_{A,\ B}$), die auf die von der ersten und zweiten Quelle erzeugten Signale ansprechen,

10

um gemäß der Kissen-Rasterverzerrungein Kissen-Rasterverzerrungs-Korrektursignal ($V_{PC}$) mit der Horizontal-Ablenkfrequenz ($V_{RS}$) zu erzeugen, das gemäß dem von der zweiten Quelle ($R_S$) erzeugten Signal moduliert wird;

mit einer Ausgangsstufe (40) der Ablenkschaltung, die auf das Signal ($V_{RS}$) mit der Vertikal-Ablenkfrequenz anspricht und eine Ablenkwicklung ($L_V$) enthält, um in der Ablenkwicklung einen Ablenkstrom mit der Vertikal-Ablenkfrequenz zu erzeugen; gekennzeichnet durch:

eine Wicklung ($W_2$) eines Transformators (T), die mit der Ablenkwicklung ($L_V$) gekoppelt ist, und

Mittel (63), die auf die Möwenflügel- und Kissen-Rasterverzerrungs-Korrektursignale ansprechen, um diese im wesentlichen durch eine Transformatorwirkung des Transformators (T) der ersten Wicklung ($W_2$) zuzuführen, um in der ersten Wicklung gemäß den Möwenflügel- und Kissen-Rasterverzerrungs-Korrektursignalen eine Modulationsspannung ($V_1$) zu erzeugen, die den Ablenkstrom ($i_V$) in einer Weise moduliert, daß eine Korrektur der Möwenflügel- und Kissen-Rasterverzerrungen derart bewirkt wird, daß eine gegebene Windung der ersten Wicklung ($W_2$) über sich eine Spannung entwickelt, die repräsentativ sowohl für die Möwenflügel- als auch für die Kissen-Rasterverzerrungs-Korrektursignale ist.

2. Vorrichtung nach Anspruch 1, dadurch gekennzeichnet, daß die Ablenkwicklung ($L_V$) die Vertikal-Ablenkung für eine Rechteck-Planar-Bildröhre (SP) bewirkt.

3. Vorrichtung nach Anspruch 1, gekennzeichnet durch Kombinationsmittel ($V1_D$) zum Kombinieren der Möwenflügel ($V_{gc}$)- und Kissen-($V_{PC}$)-Verzerrungs-Korrektursignale, um ein kombiniertes Signal ($V_{gp}$) zu erzeugen, das mit der ersten Wicklung ($W_2$) so gekoppelt ist, daß ein Signalweg, der zwischen den beiden Möwenflügel- und Kissen-Verzerrungs-Korrektursignalen und der Wicklung gebildet wird, linear ist, um so zu verhindern, daß die Modulationsspannung in dem Signalweg verzerrt wird.

4. Vorrichtung nach Anspruch 1, gekennzeichnet durch eine Kapazität ($C_{17}$), die mit der ersten Wicklung ($W_2$) verbunden ist, um einen Resonanzkreis (63) zu bilden, der auf die Horizontal-Ablenkfrequenz ($f_H$) abgestimmt ist, um durch Resonanzwirkung des Resonanzkreises die Amplitude einer Spannungskomponente ($V1_D$) der Modulationsspannung ($V_1$) zu verstärken, die die Nord-Süd-Kissen-Verzerrungskorrektur bewirkt.

5. Vorrichtung nach Anspruch 4, dadurch gekennzeichnet, daß die erste Wicklung ($W_2$) und die Kapazität ($C_{17}$) parallel geschaltet sind, um den Resonanzkreis zu bilden.

6. Vorrichtung nach Anspruch 4, dadurch gekennzeichnet, daß eine Spannungskomponente ($V1_g$) der Modulationsspannung ($V_1$), die die Möwenflügel-Verzerrungskorrektur bewirkt, eine Harmonische der Horizontal-Ablenkfrequenz ($F_H$) ist und eine Amplitude hat, die mit einer vertikalen Rate moduliert wird.

7. Vorrichtung nach Anspruch 1, gekennzeichnet durch einen Summierverstärker ($V1_D$), der auf die Korrektursignale ($V_{PC}$, $V_{gc}$) anspricht, um daraus ein Summensignal ($V_{gp}$) zu erzeugen, und der mit einer zweiten Wicklung ($W_1$) des Transformators (T) gekoppelt ist.

8. Vorrichtung nach Anspruch 7, gekennzeichnet durch einen Transistor (Q4) mit einer Steuerelektrode (Basis), die mit dem Summensignal ($V_{gp}$) gekoppelt ist, und mit einer stromführenden Hauptelektrode (Kollektor), die mit der zweiten Wicklung ($W_1$) des Transformators (T) gekoppelt ist, um in der zweiten Wicklung ($W_1$) eine erste Stromkomponente mit einer Horizontal-Frequenz, die dem Kissenverzerrungs-Korrektursignal ($V1_P$) entspricht, und eine zweite Stromkomponente mit einer höheren Harmonischen der Horizontal-Frequenz, die dem Möwenflügel-Verzerrungs-Korrektursignal ($V1_g$) entspricht, zu erzeugen.

9. Vorrichtung nach Anspruch 8, gekennzeichnet durch eine Kapazität ($C_{17}$), die mit der ersten Wicklung ($W_2$) gekoppelt ist, um einen Resonanzkreis (63) zu bilden, der auf die Horizontal-Frequenz abgestimmt ist, so daß ein Verhältnis zwischen einer Amplitude einer Spannungskomponente der Modulationsspannung ($V_1$), die dem Kissen-Entzerrungs-Korrektursignal ($V1_p$) entspricht und der der ersten Stromkomponente als Ergebnis des sich in Resonanz befindlichen Resonanzkreises (63) wesentlich höher ist als ein entsprechendes Verhältnis zwischen einer Amplitude einer Spannungskomponente der Modulationsspannung ($V_1$), die dem Möwenflügel-Verzerrungs-Korrektursignal ($V1_g$) entspricht, und der der zweiten Stromkomponente.

**10.** Vorrichtung nach Anspruch 1, dadurch gekennzeichnet, daß die Ausgangsstufe (40) der Ablenkschaltung den Ablenkstrom ($i_v$) mit einer Vertikalrate erzeugt.

**11.** Vorrichtung nach Anspruch 10, dadurch gekennzeichnet, daß die Mittel zur Erzeugung des Möwenflügel-Verzerrungs-Korrektursignals einen Sinusgenerator (80), der auf den Ablenkstrom anspricht, um ein Sinussignal ($V_{SW}$) mit einer Frequenz zu erzeugen, die auf die Vertikalrate bezogen ist, einen Frequenzverdoppler ($U2_{C, D}$), der auf das Eingangssignal mit der auf die Horizontal-Frequenz bezogenen Frequenz anspricht, um ein Signal mit einer Harmonischen der Horizontalfrequenz zu erzeugen, und einen Modulator (81) enthalten, der auf das Sinussignal ($V_{SW}$) und auf das Signal ($V_{2H}$) mit der Harmonischen ($V_{2H}$) anspricht, um das Möwenflügel-Verzerrungs-Korrektursignal ($V_{gmod}$) durch Amplitudenmodulation des Harmonischen-Signals gemäß dem Sinussignal ($V_{SW}$) zu erzeugen.

**12.** Vorrichtung nach Anspruch 1, dadurch gekennzeichnet, daß der Frequenzverdoppler Mittel ($U2_A$) enthält, die auf das Signal mit der Horizontal-Frequenz ansprechen, um ein Rechtecksignal ($V_{102}$) mit der Horizontal-Frequenz zu erzeugen, das ein Tastverhältnis von etwa 50 % hat, sowie weitere Mittel (Q1, $U2_{C, D}$, Q2), die auf das Rechtecksignal ($V_{102}$) ansprechen, um einen Ausgangsimpuls ($V_{2H}$) des Signals mit der Harmonischen zu erzeugen, immer wenn eine Übergangskante in dem Rechtecksignal ($V_{102}$) auftritt.

**13.** Vorrichtung nach Anspruch 12, dadurch gekennzeichnet, daß der Modulator (81) eine Kapazität (C2) enthält, die mit dem Sinusgeneratur ($V_{SW}$) gekoppelt ist, um ein zweites Sägezahnsignal ($V_{gmod}$) in der Kapazität (C2) mit der doppelten Horizontal-Frequenz zu erzeugen, das einen Teil hat, der in einer ersten Richtung mit einer Rate ansteigt, die durch das Sinussignal ($V_{SW}$) bestimmt ist, wobei der Modulator auf den Ausgangsimpuls des Harmonischen-Signals anspricht, der bewirkt, daß das zweite Sägezahnsignal ($V_{gmod}$) in entgegengesetzter Richtung ansteigt, wenn der Impuls des Harmonischen-Signals auftritt, der von dem Frequenzverdoppler erzeugt wird.

**14.** Vorrichtung nach Anspruch 13, dadurch gekennzeichnet, daß der Modulator (81) ferner Pegelklemm-Mittel (Z7.5) enthält, die auf den Impuls des Frequenzverdopplers ansprechen, um einen Pegel des zweiten Sägezahnsignals ($V_{gmod}$) vor einer Beginnzeit des in der ersten Richtung ansteigenden Sägezahnsignals auf einen vorgegebenen Pegel zu klemmen, wobei einstellbare Mittel (R117) vorgesehen sind, um den vorgegebenen Pegel des Sägezahnsignals so einzustellen, daß er eine Zentrierung der Möwenflügel-Verzerrungs-Korrektur bewirkt.

**15.** Vorrichtung nach Anspruch 11, gekennzeichnet durch ein mit dem Modulator (81) gekoppeltes Bandpaßfilter (83) mit einem Durchlaßbereich, dessen Mittenfrequenz ($2f_H$) doppelt so groß wie die Horizontal-Frequenz ist, um Komponentensignale außerhalb des Durchlaßbereiches aus dem Möwenflügel-Verzerrungs-Korrektursignal auszufiltern, wobei mit dem Modulator (81) gekoppelte Mittel (R114) vorgesehen sind, um die Phase des Möwenflügel-Verzerrungs-Korrektursignals relativ zur Phase des Eingangssignals mit der Horizontal-Frequenz einzustellen.

**16.** Vorrichtung nach Anspruch 11, dadurch gekennzeichnet, daß der Sinusgenerator (80) auf ein Sägezahnsignal ($V_{RS}$) anspricht, das proportional zu dem Ablenkstrom ($i_v$) ist, und das in der Ausgangsstufe (40) entwickelt wird, um das Sinussignal durch doppelte Integration des Sägezahnsignals zu erzeugen.

**17.** Vorrichtung nach Anspruch 11, gekennzeichnet durch Mittel ($R_S$), die auf den Ablenkstrom ($i_v$) ansprechen, um ein Sägezahnsignal ($V_{RS}$) zu erzeugen, das mit dem Modulator gekoppelt ist, um die S-Verzerrungs-Korrektur zu bewirken.

**18.** Vorrichtung nach Anspruch 10, dadurch gekennzeichnet, daß die Mittel zur Erzeugung des Kissenverzerrungs-Korrektursignals Mittel ($U2_{A, B}$) enthalten, die auf das Eingangssignal ($F_{HS}$) mit der Frequenz ansprechen, die auf die Horizontal-Ferquenz bezogen ist, um ein Rechtecksignal ($V_{102}$) mit einem Tastverhältnis von 50 % mit der Horizontal-Frequenz zu erzeugen, wobei ein Modulator (60) vorgesehen ist, der auf ein Sägezahnsignal ($V_{RS}$) mit der Vertikal-Freqzenz, das in der Ausgangsstufe (40) erzeugt wird, und auf das Rechtecksignal ($V_{102}$) anspricht, um das Kissenverzerrungs-Korrektursignal ($V_{pc}$) durch Amplitudenmodulation des Rechtecksignals ($V_{102}$) mit dem Sägezahnsignal ($V_{RS}$) zu erzeugen.

**19.** Vorrichtung nach Anspruch 18, dadurch gekennzeichnet, daß der Modulator (60) der die Kissenverzerrungs-Korrektursignale erzeugenden Mittel erste Schaltmittel (D2) enthält, die auf das Rechtecksignal ($V_{102}$) mit der Horizontal-Frequenz ansprechen, um während eines ersten Teils einer gegebenen Horizontal-Periode einen entsprechenden Teil des Rechtecksignals ($V_{102}$) mit einem Pegel zu erzeugen, der durch einen Pegel des Sägezahnsignals bestimmt ist, und um während eines zweiten Teils der gegebenen Horizontal-Periode einen entsprechenden Teil des Rechtecksignals mit einem Pegel zu erzeugen, der während jedes vertikalen Vorlaufintervalls des Ablenkstroms im wesentlichen konstant ist.

**20.** Vorrichtung nach Anspruch 19, gekennzeichnet durch mit der Ausgangsstufe (40) gekoppelte Mittel (41), um ein Signal ($V_V$) zu erzeugen, das einen Vertikal-Rücklaufimpuls in der Ausgangsstufe darstellt, wobei das den Rücklaufimpuls darstellende Signal ($V_V$) mit den ersten Schaltmitteln (D2) gekoppelt ist, um den Pegel des Rechtecksignals während des zweiten Teils der gegebenen Horizontal-Periode zu steuern und während des Horizontal-Rücklaufs um eine Zeit vorzuziehen, wenn in einem Komponentenstrom eine Phasenumkehr des Ablenkstroms auftritt, der die Kissenverzerrungs-Korrektur bewirkt.

## Revendications

**1.** Dispositif de déviation pour la télévision avec corrections de la distorsion en aile de mouette et de trame en coussinet N-S comprenant :
- une première source (R9 - C7) d'un signal d'entrée ($F_{HS}$) à une fréquence de déviation horizontale ;
- une seconde source ($R_S$) d'un signal d'entrée ($V_{RS}$) à une fréquence de déviation verticale ;
- des moyens ($U2_{C,D}$) agissant en réponse auxdits signaux qui sont produits par les première et seconde sources pour générer, en fonction de ladite distorsion de trame en aile de mouette, un signal de correction de distorsion de trame en aile de mouette, à une troisième fréquence ($2f_H$) qui est modulée en fonction dudit signal ($V_{RS}$) qui est produit par ladite seconde source ($R_S$) ;
- des moyens ($U2_{A,B}$) agissant en réponse auxdits signaux qui sont produits par lesdites première et seconde sources pour générer, en fonction de ladite distorsion de trame en coussinet, un signal de correction de trame en coussinet ($V_{PC}$), à ladite fréquence de déviation horizontale, qui est modulé selon ledit signal ($V_{RS}$) qui est produit par ladite seconde source ($R_S$) ;
- un étage de sortie du circuit de déviation (40) agissant en réponse audit signal ($V_{RS}$) à ladite fréquence de déviation verticale, qui comporte un enroulement de déviation ($L_V$) pour générer un courant de déviation dans ledit enroulement de déviation à ladite fréquence de déviation verticale caractérisé par :
- un enroulement ($W_2$) d'un transformateur (T) couplé audit enroulement de déviation ($L_V$) et,
- des moyens (63) agissant en réponse auxdits signaux de correction de distorsion de trame en coussinet et en aile de mouette, pour appliquer chaque signal à l'aide d'un effet de transformateur dudit transformateur (T) audit premier enroulement ($W_2$) pour générer dans ledit premier enroulement, selon les signaux de correction de distorsion de trame en coussinet et en aile de mouette, une tension de modulation ($V_1$) qui module ledit courant de déviation ($i_V$) d'une façon qui assure la correction desdites distorsions de trame en coussinet et en aile de mouette de manière qu'une spire d'enroulement donnée dudit premier enroulement ($W_2$) développe une tension dans cet enroulement qui est représentative à la fois du signal de correction de distorsion de trame en coussinet et du signal de correction de distorsion en aile de mouette.

**2.** Dispositif selon la revendication 1 caractérisé en ce que ledit enroulement de déviation ($L_V$) assure la déviation verticale pour un tube image plan-rectangulaire (SP).

**3.** Dispositif selon la revendication 1 caractérisé par des moyens de combinaison ($V1_D$) pour combiner lesdits signaux de correction de distorsion en coussinet ($V_{PC}$) et en aile de mouette ($V_{gc}$) en générant un signal combiné ($V_{gp}$) qui est couplé audit premier enroulement ($W_2$) de manière qu'une trajectoire de signaux, qui est formée entre chacun des signaux de correction de distorsion en coussinet et en aile de mouette et ledit premier enroulement, soit linéaire, afin d'empêcher ladite tension de modulation d'être distordue dans ladite trajectoire de signaux.

**4.** Dispositif selon la revendication 1 caractérisé par une capacité ($C_{17}$) couplée audit premier enroule-ment ($W_2$) pour former un circuit résonnant (63) qui est accordé à une fréquence de déviation horizontale ($f_H$) pour amplifier, par une action de résonnant dudit circuit résonnant, une amplitude d'une composante de tension ($V1_P$) de ladite tension de modulation (V1) qui assure ladite correction de distorsion en coussinet Nord-Sud.

**5.** Dispositif selon la revendication 4 caractérisé en ce que ledit premier enroulement ($W_2$) et ladite capacité ($C_{17}$) sont couplés en parallèle pour former ledit circuit résonnant (63).

**6.** Dispositif selon la revendication 4 caractérisé en ce qu'une composante de tension ($V1_g$) de ladite tension de modulation (V1) qui assure la correction de la distorsion en aile de mouette est à une harmonique de ladite fréquence horizontale ($f_H$) et présente une amplitude qui est modulée à une vitesse verticale.

**7.** Dispositif selon la revendication 1 caractérisé par un amplificateur additionneur ($V1_D$) agissant en réponse auxdits signaux de correction ($V_{pc}$, $V_{gc}$) pour générer un signal de somme ($V_{gp}$) desdits signaux, qui est couplé à un second enroulement ($W_1$) dudit transformateur (T).

**8.** Dispositif selon la revendication 7 caractérisé par un transistor (Q4) ayant une électrode de commande (base) qui est couplée audit signal de somme ($V_{gp}$) et une électrode principale de conduction de courant (collecteur) qui est couplée audit second enroulement ($W_1$) dudit transformateur (T) pour générer dans ledit second enroulement ($W_1$) une première composante de courant à une fréquence horizontale qui correspond audit signal de correction de distorsion en coussinet ($V1_P$) et, une seconde composante de courant à une harmonique plus élevée de ladite fréquence horizontale qui correspond audit signal de correction de distorsion en aile de mouette.

**9.** Dispositif selon la revendication 9 caractérisé par une capacité ($C_{17}$) couplée audit premier enroulement ($W_2$) pour former un circuit résonnnant (63) qui est accordé à ladite fréquence horizontale de manière qu'un rapport entre une amplitude d'une composante de tension de ladite tension de modulation (V1), qui correspond au signal de correction de distorsion en coussinet ($V1_p$) et à celui de la première composante de courant soit, étant donné que ledit circuit résonnant (63) est en résonnance, sensiblement plus élevé qu'un rapport correspondant entre une amplitude d'une composante de tension de ladite tension de modulation (V1) qui correspond audit signal de correction de distorsion en aile de mouette ($V1_g$) et à celui de ladite seconde composante de courant.

**10.** Dispositif selon la revendication 1 caractérisé en ce que ledit étage de sortie du circuit de déviation (40) génère ledit courant de déviation ($i_v$) à une vitesse verticale.

**11.** Dispositif selon la revendication 10 caractérisé en ce que lesdits moyens de génération de signal de correction de la distorsion en aile de mouette comprennent un générateur d'onde sinusoidale (80), agissant en réponse au signal de déviation pour générer un signal d'onde sinusoidale ($V_{SW}$), à une fréquence qui est fonction de ladite vitesse verticale, un doubleur de fréquence ($U2_{C,D}$) agissant en réponse audit signal d'entrée à ladite fréquence qui est fonction de la fréquence horizontale, pour générer un signal à une harmonique de ladite fréquence horizontale, et un modulateur (81) agissant en réponse audit signal d'onde sinusoidale ($V_{SW}$) et audit signal ($V_{2H}$) à ladite harmonique, pour générer ledit signal de correction de distorsion en aile de mouette ($V_{gmod}$), par modulation d'amplitude dudit signal harmonique selon ledit signal en onde sinusoidale ($V_{SW}$).

**12.** Dispositif selon la revendication 11 caractérisé en ce que le doubleur de fréquence comprend des moyens ($U2_A$) agissant en réponse à un signal à ladite fréquence horizontale pour générer un signal d'onde rectangulaire ($V_{102}$) à ladite fréquence horizontale ayant sensiblement un cycle de service de 50% et, des moyens (Q1, $U2_{C,D}$, Q2) agissant en réponse audit signal d'onde rectangulaire ($V_{102}$) pour générer une impulsion de sortie ($V_{2H}$) dudit signal à ladite harmonique lorsque chaque bord de transition se produit dans ledit signal d'onde rectangulaire ($V_{102}$).

**13.** Dispositif selon la revendication 12 caractérisé en ce que ledit modulateur (81) comprend une capacité (C2) couplée audit signal d'onde sinusoidale ($V_{SW}$) pour générer un second signal en dents de scie ($V_{gmod}$) dans ladite capacité (C2) au double de la fréquence horizontale, ayant une portion qui suit une pente dans une première direction à une vitesse qui est déterminée par ledit signal en onde sinusoidale ($V_{SW}$), ledit modulateur agissant en réponse à ladite impulsion de sortie dudit signal

14

harmonique qui amène ledit signal en dents de scie ($V_{gmod}$) à suivre une pente dans une direction opposée lorsque se produit ladite impulsion dudit signal harmonique qui est généré par le doubleur de fréquence.

14. Dispositif selon la revendication 13 caractérisé en ce que ledit modulateur (81) comprend en outre, des moyens de verrouillage de niveaux (Z7.5) agissant en réponse à ladite impulsion du doubleur de fréquence pour verrouiller un niveau dudit second signal en dents de scie ($V_{gmod}$) pour qu'il soit à un niveau prédéterminé avant l'instant du début de ladite portion du signal en dents de scie qui suit une pente dans ladite première direction et, des moyens de réglage (R117) pour régler ledit niveau prédéterminé dudit signal en dents de scies afin de fournir le centrage de la correction de la distorsion en aile de mouette.

15. Dispositif selon la revendication 11 caractérisé par un filtre passe-bande (83) couplé audit modulateur (81), ayant un domaine de fréquences de bande passante qui est centré sur une fréquence ($2f_H$) qui est égal à deux fois la fréquence horizontale pour filtrer des signaux de composantes extérieurs audit domaine de fréquences de bande passante, à partir du signal de correction de distorsion en aile de mouette et, des moyens (R114) couplé audit modulateur (81) pour régler une phase dudit signal de correction de la distorsion en aile de mouette par rapport à celle dudit signal d'entrée qui est à ladite fréquence horizontale.

16. Dispositif selon la revendication 11 caractérisé en ce que ledit générateur d'ondes sinusoidales (80) agit en réponse à un signal en dents de scie ($V_{RS}$) qui est proportionnel audit courant de déviation ($i_v$) et qui est développé dans ledit étage de sortie (40) pour générer ledit signal en onde sinusoidale par une double intégration dudit signal en dents de scie.

17. Dispositif selon la revendication 11 caractérisé par des moyens ($R_S$) agissant en réponse audit courant de déviation ($i_v$) pour générer un signal en dents de scie ($V_{RS}$) qui est couplé audit modulateur (81) pour fournir une correction de distorsion en S.

18. Dispositif selon la revendication 10 caractérisé en ce que les moyens générant le signal de correction de distorsion en coussinet comprennent des moyens ($U2_{,A,B}$) agissant en réponse audit signal d'entrée ($F_{HS}$) à ladite fréquence qui est fonction de ladite fréquence horizontale pour générer un signal d'onde rectangulaire ($V_{102}$) ayant un cycle de service de 50% à ladite fréquence horizontale, et un modulateur (60) agissant en réponse à un signal en dents de scie ($V_{RS}$) à ladite vitesse verticale, qui est généré dans ledit étage de sortie (40), et audit signal d'onde rectangulaire ($V_{102}$) pour générer ledit signal de correction de distorsion en coussinet ($V_{pc}$) par une modulation d'amplitude dudit signal d'onde rectangulaire ($V_{102}$) en fonction du signal en dents de scie ($V_{RS}$).

19. Dispositif selon la revendication 18 caractérisé en ce que ledit modulateur (60) desdits moyens de génération du signal de correction de distorsion en coussinet comprennent des premiers moyens de commutation (D2) agissant en réponse audit signal d'onde rectangulaire ($V_{102}$) à ladite fréquence horizontale pour générer, pendant une première portion d'une période horizontale donnée, une portion correspondante dudit signal à onde rectangulaire ($V_{102}$), à un niveau qui est déterminé par un niveau dudit signal en dents de scie, et pendant une seconde portion de ladite période horizontale donnée, une portion correspondante dudit signal d'onde rectangulaire à un niveau qui pendant chaque intervalle de tracé vertical dudit courant de déviation, est sensiblement constant.

20. Dispositif selon la revendication 19 caractérisé par des moyens (41) couplés audit étage de sortie (40) pour générer un signal ($V_V$) qui est représentatif d'une impulsion de retour vertical dans ledit étage de sortie, ledit signal représentatif de l'impulsion de retour ($V_V$) étant couplé auxdits premiers moyens de commutation ($D_2$) pour commander ledit niveau dudit signal d'onde rectangulaire pendant la seconde portion de ladite période horizontale qui avance, pendant le retour vertical, d'un instant lorsque se produit l'inversion de phase dans un courant de composante dudit courant de déviation qui affecte la correction de distorsion en coussinet.

Fig. 1

Fig. 2

PINCUSHION DISTORTION OF RASTER

*Fig. 3*

UI$_A$ : SAWTOOTH AMP.
UI$_B$ : SINE GEN.
UI$_C$ : 2f$_H$ BP. FILTER
UI$_D$ : SUMMING AMP.

VERTICAL DEFLECTION AMPLIFIER

TDA 2653A   RETRACE

T : VOGT K-5321400000 ADJUST.
W$_1$ : 70 TURNS Φ0,35mm
W$_2$ : 335 TURNS Φ0,5mm MAX. 3,5mH

ALL RESISTORS 10% IF NOT OTHERWISE SPECIFIED.

U2$_{A,B}$ : COS.-MOD.
U2$_{C,D}$ : FREQUENCY DOUBLER

COSINE AMP.
REF REF
UI-CA084
GULL. PHASE
GULL. AMP.
COSINE PHASE
COSINE CENT.
GULL. CENT.

*Fig. 4*

Fig. 5

Fig. 6